# EUROPÄISCHE PATENTSCHRIFT

(11) **EP 4 413 013 B1**
(45) Veröffentlichungstag und Bekanntmachung des Hinweises auf die Patenterteilung: **26.02.2025**
(21) Anmeldenummer: 21789659.6
(22) Anmeldetag: 05.10.2021
(51) Int. Cl.: C07F 7/18

(54) **SILYLBENZPINAKOL RADIKALINITIATOREN**
SILYLBENZOPINACOL RADICAL INITIATORS
INITIATEURS DE RADICAUX SILYLBENZOPINACOL

(43) Veröffentlichungstag der Anmeldung: 14.08.2024
(73) Patentinhaber: Wacker Chemie AG, 81671 München (DE)
(72) Erfinder: DELLERMANN, Theresa, 81371 München (DE); FEHN, Armin, 84561 Mehring (DE); HELDMANN, Dieter, 84489 Burghausen (DE); WALCH, Ramona, 81379 München (DE)
(74) Vertreter: Belz, Ferdinand
(86) Internationale Anmeldenummer: PCT/EP2021/077402
(87) Internationale Veröffentlichungsnummer: WO 2023/057049

(56) Entgegenhaltungen:
- US-A1- 2019 309 123
- J. V. CRIVELLO ET AL: "Polydimethylsiloxane–vinyl block polymers. I. The synthesis of polydimethylsiloxane macroinitiators containing thermolyzable bis(silyl pinacolate) groups in their backbones", JOURNAL OF POLYMER SCIENCE PART A: POLYMER CHEMISTRY, vol. 24, no. 6, 1 June 1986 (1986-06-01), pages 1197 - 1215, XP055113415, ISSN: 0887-624X, DOI: 10.1002/pola.1986.080240609
- ROUSSEL J ET AL: "Control of free-radical polymerization of 2,2,2-trifluoroethyl methacrylate (TEMA) by a substituted fluorinated tetraphenylethane-type INITER", JOURNAL OF FLUORINE CHEMISTRY, ELSEVIER, NL, vol. 108, no. 1, 1 March 2001 (2001-03-01), pages 37 - 45, XP004231217, ISSN: 0022-1139, DOI: 10.1016/S0022-1139(00)00406-1

## Beschreibung

Die Erfindung betrifft ein Verfahren zur Herstellung von Silylbenzpinakol Radikalinitiatoren aus Benzophenon, Reduktionsmittel und Chloralkylsilan.

Silylbenzpinakole sind thermische Radikalinitiatoren, die für die kontrollierte Vernetzung von ungesättigten Harzen eingesetzt werden. Ihre beispielsweise in DE2632294A beschriebene Herstellung erfolgt durch die Umsetzung von Benzophenon mit Magnesium und anschließender Zugabe eines Dichlor-, Trichloralkylsilans mit einem C1 oder C2 Alkylrest oder Mischungen. Typischerweise werden Trichlormethylsilan oder Dichlordimethylsilan eingesetzt, was nach der Hydrolyse und Aufarbeitung zu einem komplexen, aktiven Produktgemisch führt.

Die nach den literaturbekannten Verfahren (siehe Vergleichsbeispiel 1) erhältlichen Produkte sind trübe, inhomogene Suspensionen. Sie zeigen die gewünschte Reaktivität als Radikalstarter für ungesättigte, radikalisch polymerisierbare Substanzen. Aufgrund ihrer Inhomogenität ist jedoch eine exakte Einstellung der Härtungsgeschwindigkeit von ungesättigten, radikalisch polymerisierbaren Substanzen, insbesondere im industriell-technischen Maßstab schwierig, und die Dosierung des Radikalstarters muss oft nachkorrigiert werden, um thermisch polymerisierbare Gemische mit konstanter Härtungsgeschwindigkeit zu erhalten.

Zusätzlich kommt es bei Lagerung zur Bildung von Bodensatz durch das Absetzen des fein verteilten Feststoffes der Suspension. Diese separierten Suspensionen müssen durch einen zusätzlichen Arbeitsschritt wieder aufwendig homogenisiert werden, was im technischen Maßstab für den Fachmann verständlicherweise oft zu Problemen führt.

DE2615039A1 beschreibt monomere Benzpinacolsilylether für den Einsatz als freie radikalische Initiatoren, welche durch die reduktive Umsetzung von Benzophenon mit Trialkylmonochlorsilanen hergestellt werden können. Die Produkte können je nach Substituenten als Feststoffe oder Flüssigkeiten vorliegen, im Falle von langkettigen Alkylsubstituenten können flüssige, homogene Produkte erhalten werden. Diese zeigen jedoch weitaus geringere Aktivitäten im Vergleich zu ihren oligomeren Vertretern, welche aus Dialkyldichlor- oder Alkyltrichlorsilanen erhalten werden können. Für den industriellen Einsatz sind sie deshalb weniger geeignet. Ein Verfahren zur Herstellung von 5,8-Dioxa-4,9-disiladodecane wird im Journal Journal of Polymer Science Part A: Polymer Chemistry, Bd. 24, Nr. 6, 1. Juni 1986 (1986-06-01), Seiten 1197-1215 beschrieben.

Es besteht daher der Bedarf an Radikalstartern, die als homogene Lösungen vorliegen und gleichzeitig hohe Reaktivität zeigen. Je höher die Reaktivität des Radikalstarters, desto weniger Radikalstarter kann eingesetzt werden, was aus Kostengründen bevorzugt ist.

Gegenstand der Erfindung ist ein Verfahren zur Herstellung von Silylbenzpinakol Radikalinitiatoren, bei dem Benzophenon mit einem Reduktionsmittel, das ausgewählt wird aus Alkali und Erdalkalimetall und Silan der allgemeinen Formel (I)

R¹R²SiCl₂ (I),

in der
**R¹** einen C3-C32 Alkylrest bedeutet und
**R²** einen C1-C32 Alkylrest oder Cl bedeutet,
umgesetzt wird.

Gegenstand der Erfindung sind auch die nach dem Verfahren erhältlichen Silylbenzpinakol Radikalinitiatoren.

Die erfindungsgemäßen Silylbenzpinakol Radikalinitiatoren sind klare und homogene Produktmischungen, welche den Einsatz in der Anwendung erheblich erleichtern. Die Initiatorgemische sind aufgrund von langkettigen Alkylsubstituenten am Siliciumatom flüssig und weisen keine Trübung auf. Sie sind damit leichter verarbeitbar, weil sie keine Sedimentation verursachen, welche wiederum Schwankungen in der Aktivität hervorrufen. Sie zeigen als Radikalinitiatoren hohe Reaktivität.

Vorzugsweise wird das Reduktionsmittel ausgewählt aus Lithium, Natrium, Kalium, Magnesium und Calcium, insbesondere ist es Magnesium.

Es kann ein Silan der allgemeinen Formel (I) oder ein Gemisch aus verschiedenen Silanen der allgemeinen Formel (I) eingesetzt werden.

Die Alkylreste **R¹** können linear, verzweigt oder cyclisch sein. Beispiele für Alkylreste **R¹** sind n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest.

In einer bevorzugten Ausführungsform ist **R¹** ein Alkylrest mit 3 bis 20 Kohlenstoffatomen, insbesondere 3 bis 10 Kohlenstoffatomen.

Die Alkylreste **R¹** können linear, verzweigt oder cyclisch sein. Beispiele für Alkylreste **R²** sind Methyl- und Ethylrest, sowie die für **R¹** aufgeführten Alkylreste. In einer bevorzugten Ausführungsform ist **R²** ein Alkylrest mit 1 bis 6 Kohlenstoffatomen, insbesondere Methyl-, Ethyl-, n-Propyl- oder iso-Propylrest, insbesondere Methylrest.

In einer bevorzugten Ausführungsform ist **R¹** ein Alkylrest mit 3 bis 18 Kohlenstoffatomen und **R²** ist Cl.

Überraschenderweise besitzen Silylbenzpinakole aus Dialkyldichlorsilanen eine gesteigerte Reaktivität.

Diese gesteigerte Reaktivität konnte bereits mit Dichlordimethylsilan beobachtet werden, jedoch ist der entsprechende Silylbenzpinakol ein Feststoff und kann deshalb nur schlecht oder nicht verarbeitet werden.

Auch in einer Mischung mit Trichlormethylsilan kann eine gesteigerte Reaktivität beobachtet werden, das Produkt ist jedoch auch trüb bzw. fest.

Insbesondere zeigen Produkte aus Dialkyldichlorsilanen überraschenderweise im Vergleich zu ihren Trichloralkylsilan-Analoga eine erheblich gesteigerte Reaktivität.

In einer bevorzugten Ausführungsform ist deshalb **R¹** ein Alkylrest mit 3 bis 32 Kohlenstoffatomen, und **R²** ist ein Alkylrest mit 1 bis 32 Kohlenstoffatomen, bevorzugt ist **R¹** ein Alkylrest mit 3 bis 20 Kohlenstoffatomen, und **R²** ist ein Alkylrest mit 1 bis 20 Kohlenstoffatomen, besonders bevorzugt ist **R¹** ein Alkylrest mit 6 bis 12 Kohlenstoffatomen, und **R²** ist ein Alkylrest mit 1 bis 3 Kohlenstoffatomen, insbesondere ist **R¹** ein Alkylrest mit 6 bis 14 Kohlenstoffatomen, und **R²** ist ein Methylrest.

Das Verfahren kann in Anwesenheit oder in Abwesenheit von aprotischen Lösungsmitteln durchgeführt werden. Bevorzugt sind aprotische und polare Lösemittel. Falls aprotische Lösungsmittel verwendet werden, sind Lösungsmittel oder Lösungsmittelgemische mit einem Siedepunkt bzw. Siedebereich von bis zu 250°C bei 0,1 MPa bevorzugt. Beispiele für solche Lösungsmittel sind Ether, wie Dioxan, Tetrahydrofuran, Diethylether, Methyl-tert-butylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan; N.N-disubsituierte Amide wie Dimethylformamid, N.N-Dimethylacetamid und Phosphorsäuretris-(dimethylamid); Alkylphosphate wie Trialkylphosphate, insbesondere Triethylphosphat oder Gemische dieser Lösungsmittel.

Bevorzugt sind Ether, Kohlenwasserstoffe, Trialkyphosphate und Gemische davon.

Die Bezeichnung Lösungsmittel bedeutet nicht, dass sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

In einer bevorzugten Ausführungsform wird die Reaktion mit Iod aktiviert. Vorzugsweise werden pro Mol Reduktionsmittel 0,001 bis 0,1 Mol Iod zugesetzt.

Vorzugsweise werden zuerst Benzophenon und das Reduktionsmittel und gegebenenfalls Iod zusammengegeben und danach das Silan der allgemeinen Formel (I) zugesetzt.

Vorzugsweise beträgt das molare Verhältnis von Benzophenon zu Reduktionsmittel zwischen 0,8 und 1,5, insbesondere zwischen 0,9 und 1,1 beim Reduktionsmittel Lithium, Natrium und Kalium, oder 0,3 bis 0,75, insbesondere 0,4 bis 0,6 beim Reduktionsmittel Magnesium und Calcium.

Vorzugsweise beträgt das molare Verhältnis von Benzophenon zu Silan der allgemeinen Formel (I), bezogen auf das Cl zwischen 0,6 und 1,8, insbesondere zwischen 0,8 und 1,2.

Das Verfahren wird vorzugsweise bei einer Temperatur zwischen 0°C und 80°C, besonders bevorzugt zwischen 10 und 60°C, insbesondere zwischen 20 und 50°C durchgeführt.

Vorzugsweise beträgt die Reaktionsdauer nach Zugabe des Silans der allgemeinen Formel (I) 30 min bis 1 d, besonders bevorzugt zwischen 1 bis 8 h, insbesondere 2 bis 6 h.

Die Aufarbeitung der Reaktion erfolgt bevorzugt durch Zugabe von Wasser, Neutralisierung mit einer schwachen Base, wie Natriumhydrogencarbonat und Abtrennung der wässrigen Phase.

Wenn das Verfahren in Anwesenheit von aprotischen Lösungsmitteln durchgeführt wird, werden diese vorzugsweise destillativ abgetrennt.

Die erfindungsgemäßen Silylbenzpinakol Radikalinitiatoren finden Anwendung als thermische Radikalinitiatoren für ungesättigte vinylische Verbindungen, wie ungesättigte Polyesterharze und Styrole.

### Analytik für die gesamte Erfindung:

### Gelzeitmessung zur Bestimmung der Reaktivität

Die Messung erfolgt an einem kommerziell erhältlichen ungesättigten Polyesterharz (PALATAL P04-1) der Firma BÜFA mittels eines Geliermessgerätes der Firma Rosentreter. Für die Messung wird das Harz mit 1% der Produktmischung vermischt, in ein Reagenzglas (160 x 16 mm) gefüllt und am Geliergerät befestigt. Die Probe wird auf 90 °C temperiert und der Hubzyklus des Stempels sowie die Gelierzeitmessuhr gestartet. Die Gelierzeit wird gestoppt, sobald der Drucksensor des Gerätes auslöst.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Beispiel 1 (nicht erfindungsgemäß):

50 g Benzophenon werden in Xylol bei 30 °C gelöst und anschließend 3,4 g Magnesium, 15 ml THF, 34 ml Triethylphosphat und 0,06 g Iod zugegeben. Es werden 11 ml Trichlormethylsilan über einen Zeitraum von 180 Minuten dosiert und die Reaktion weitere 60 Minuten bei 40 °C gerührt. Nach Reaktionsende werden 40 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile am Kurzwegverdampfer destillativ abgetrennt. Es entsteht eine viskose, gelbe Flüssigkeit, welche bei Lagerung trüb wird. Die Gelzeit beträgt 9,7 Min.

### Beispiel 2 (nicht erfindungsgemäß):

50 g Benzophenon werden in Xylol bei 30 °C gelöst und anschließend 3,4 g Magnesium, 15 ml THF, 34 ml Triethylphosphat und 0,06 g Iod zugegeben. Es werden 20 ml Dichlordimethylsilan dosiert und die Reaktion für 4 h bei 40 °C gerührt. Nach Reaktionsende werden 40 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile destillativ abgetrennt. Es entsteht ein weißer, schwerlöslicher Feststoff. Die Gelzeit beträgt 6,5 Min. Das auspolymerisierte Harz ist inhomogen.

### Beispiel 3 (nicht erfindungsgemäß):

50 g Benzophenon werden in Xylol bei 30 °C gelöst und anschließend 3,4 g Magnesium, 15 ml THF, 34 ml Triethylphosphat und 0,06 g Iod zugegeben. Es werden 35 ml Chlortrimethylsilan dosiert und die Reaktion für 4 h bei 40 °C gerührt. Bereits während der Reaktion kann Feststoffbildung beobachtet werden. Nach Reaktionsende werden 40 ml Wasser innerhalb von 10 Min zugegeben, und anschließend wird die wässrige Phase abgetrennt. Die organische Phase und der gebildete Feststoff werden mit Natriumhydrogencarbonatlösung neutralisiert, und nach erneuter Abtrennung der wässrigen Phase werden flüchtige Bestandteile destillativ abgetrennt. Es entsteht ein weißer, schwerlöslicher Feststoff. Die Gelzeit beträgt 25 Min. Das auspolymerisierte Harz ist inhomogen.

### Beispiel 4 (nicht erfindungsgemäß):

50 g Benzophenon werden in Xylol bei 30 °C gelöst und anschließend 3,4 g Magnesium, 15 ml THF, 34 ml Triethylphosphat und 0,06 g Iod zugegeben. Es werden 64 ml Chlordimethyloctylsilan dosiert, und die Reaktion wird für 4 h bei 40 °C gerührt. Nach Reaktionsende werden 40 ml Wasser innerhalb von 10 Min zugegeben und anschließend die Phasen getrennt. Die organische Phase wird mit Natriumhydrogencarbonatlösung neutralisiert, und nach erneuter Phasenseparation werden die flüchtigen Bestandteile destillativ abgetrennt. Es entsteht eine gelbe Flüssigkeit. Die Gelzeit beträgt 20 Min.

### Beispiel 5:

45 g Benzophenon werden in Xylol bei 30 °C gelöst und anschließend 3,1 g Magnesium, 15 ml THF, 30 ml Triethylphosphat und 0,06 g Iod zugegeben. Es werden 13 ml Trichlorpropylsilan dosiert, und die Reaktion wird für 4 h bei 40 °C gerührt. Nach Reaktionsende werden 80 ml Wasser innerhalb von 10 Min zugegeben und anschließend die Phasen getrennt. Die organische Phase wird mit Natriumhydrogencarbonatlösung neutralisiert und nach erneuter Phasentrennung werden flüchtige Bestandteile am Kurzwegverdampfer destillativ abgetrennt. Es entsteht eine viskose, gelbe Flüssigkeit. Das Produkt bleibt auch nach Lagerung klar. Die Gelzeit beträgt 11 Min.

### Beispiel 6:

45 g Benzophenon werden in Xylol bei 30 °C gelöst und anschließend 3,1 g Magnesium, 15 ml THF, 30 ml Triethylphosphat und 0,06 g Iod zugegeben. Es werden 20 ml Trichlorhexadecylsilan dosiert und die Reaktion für 4 h bei 40 °C gerührt. Nach Reaktionsende werden 80 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile am Kurzwegverdampfer destillativ abgetrennt. Es entsteht eine viskose, gelbe Flüssigkeit. Das Produkt bleibt auch nach Lagerung klar. Die Gelzeit beträgt 8,9 Min.

### Beispiel 7:

50 g Benzophenon werden in Xylol bei 30 °C gelöst und anschließend 3,4 g Magnesium, 15 ml THF, 34 ml Triethylphosphat und 0,06 g Iod zugegeben. Es werden 35 ml Methyl-n-octyldichlorsilan dosiert und die Reaktion für 4 h bei 40 °C gerührt. Nach Reaktionsende werden 40 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile am Kurzwegverdampfer destillativ abgetrennt. Es entsteht eine viskose, gelbe Flüssigkeit. Das Produkt bleibt auch nach Lagerung klar. Die Gelzeit beträgt 6,2 Min.

### Beispiel 8:

40 g Benzophenon werden in Xylol bei 30 °C gelöst und anschließend 2,8 g Magnesium, 12 ml THF, 27 ml Triethylphosphat und 0,05 g Iod zugegeben. Es werden 47 ml Methyl-n-octadecyldichlorsilan dosiert, und die Reaktion wird für 4 h bei 40 °C gerührt. Nach Reaktionsende werden 40 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile am Kurzwegverdampfer destillativ abgetrennt. Es entsteht eine viskose, gelbe Flüssigkeit. Das Produkt bleibt auch nach Lagerung klar. Die Gelzeit beträgt 5,9 Min.

### Beispiel 9:

25 g Benzophenon werden in Xylol bei 30 °C gelöst und anschließend 1,7 g Magnesium, 7,4 ml THF, 17 ml Triethylphosphat und 0,03 g Iod zugegeben. Es werden 25 ml Dichlordioctylsilan dosiert, und die Reaktion wird für 4 h bei 40 °C gerührt. Nach Reaktionsende werden 20 ml Wasser innerhalb von 10 Min zugegeben und anschließend die Phasen getrennt. Die organische Phase wird mit Natriumhydrogencarbonatlösung neutralisiert, und nach erneuter Phasentrennung werden flüchtige Bestandteile am Kurzwegverdampfer destillativ abgetrennt. Es entsteht eine viskose, gelbe Flüssigkeit. Das Produkt bleibt auch nach Lagerung klar. Die Gelzeit beträgt 8,0 Min.

## Patentansprüche

1. Verfahren zur Herstellung von Silylbenzpinakol Radikalinitiatoren, bei dem Benzophenon mit einem Reduktionsmittel, das ausgewählt wird aus Alkali und Erdalkalimetall und Silan der allgemeinen Formel (I)
R¹R²SiCl₂ (I),
in der
**R¹** einen C3-C32 Alkylrest bedeutet und
**R²** einen C1-C32 Alkylrest oder Cl bedeutet, umgesetzt wird.

2. Verfahren nach Anspruch 1, bei dem R¹ ein Alkylrest mit 3 bis 18 Kohlenstoffatomen ist und **R²** Cl ist.

3. Verfahren nach einem der vorangehenden Ansprüche, bei dem **R¹** ein Alkylrest mit 3 bis 20 Kohlenstoffatomen ist und **R²** ein Alkylrest mit 1 bis 20 Kohlenstoffatomen ist.

4. Verfahren nach einem der vorangehenden Ansprüche, bei dem das Reduktionsmittel Magnesium ist.

5. Verfahren nach einem der vorangehenden Ansprüche, welches in Anwesenheit von aprotischen Lösungsmitteln durchgeführt wird.

6. Verfahren nach einem der vorangehenden Ansprüche, bei dem die Reaktion mit Iod aktiviert wird.

7. Verfahren nach einem der vorangehenden Ansprüche, bei dem zuerst Benzophenon und das Reduktionsmittel und gegebenenfalls Iod zusammengegeben werden und danach das Silan der allgemeinen Formel (I) zugesetzt wird.

8. Verfahren nach einem der vorangehenden Ansprüche, bei dem die Aufarbeitung der Reaktion durch Zugabe von Wasser, Neutralisierung mit einer schwachen Base und Abtrennung der wässrigen Phase erfolgt.

## Claims

1. Method for preparing silyl benzopinacol free-radical initiators, in which benzophenone is reacted with a reductant selected from alkali metal and alkaline earth metal and silane of the general formula (I)
R¹R²SiCl₂ (I),
in which
R¹ is a C3-C32 alkyl radical and
R² is a C1-C32 alkyl radical or Cl.

2. Method according to Claim 1, in which R¹ is an alkyl radical having 3 to 18 carbon atoms and R² is Cl.

3. Method according to either of the preceding claims, in which R¹ is an alkyl radical having 3 to 20 carbon atoms and R² is an alkyl radical having 1 to 20 carbon atoms.

4. Method according to any of the preceding claims, in which the reductant is magnesium.

5. Method according to any of the preceding claims, which is carried out in the presence of aprotic solvents.

6. Method according to any of the preceding claims, in which the reaction is activated with iodine.

7. Method according to any of the preceding claims, in which first benzophenone and the reductant and optionally iodine are combined and then the silane of the general formula (I) is added.

8. Method according to any of the preceding claims, in which the reaction is worked up by adding water, neutralizing with a weak base, and removing the aqueous phase.

## Revendications

1. Procédé de préparation d'initiateurs radicalaires de type silylbenzopinacol, dans lequel on transforme de la benzophénone avec un agent de réduction, qui est choisi parmi les métaux alcalins et alcalino-terreux, et un silane de formule générale (I)
R¹R²SiCl₂ (I),
dans laquelle
R¹ signifie un radical alkyle en C3-C32 et
R² signifie un radical alkyle en C1-C32 ou Cl,.

2. Procédé selon la revendication 1, dans lequel R¹ représente un radical alkyle comprenant 3 à 18 atomes de carbone et R² représente Cl.

3. Procédé selon l'une des revendications précédentes, dans lequel R¹ représente un radical alkyle comprenant 3 à 20 atomes de carbone et R² représente un radical alkyle comprenant 1 à 20 atomes de carbone.

4. Procédé selon l'une des revendications précédentes, dans lequel l'agent de réduction est le magnésium.

5. Procédé selon l'une des revendications précédentes, qui est mis en œuvre en présence de solvants aprotiques.

6. Procédé selon l'une des revendications précédentes, dans lequel la réaction est activée avec de l'iode.

7. Procédé selon l'une des revendications précédentes, dans lequel la benzophénone et l'agent de réduction et le cas échéant l'iode sont d'abord combinés, puis le silane de formule générale (I) est ajouté.

8. Procédé selon l'une des revendications précédentes, dans lequel le traitement de la réaction est effectué par ajout d'eau, neutralisation avec une base faible et séparation de la phase aqueuse.
